# EUROPÄISCHE PATENTANMELDUNG

(11) **EP 1 921 343 A2**
(43) Veröffentlichungstag der Anmeldung: **14.05.2008**
(21) Anmeldenummer: 07120326.9
(22) Anmeldetag: 09.11.2007
(51) Int. Cl.: F16G 13/20

(54) **Führung für eine rückensteife Kette**

(30) Priorität: 10.11.2006 DE 202006017304 U
(71) Anmelder: D+H Mechatronic AG, 22949 Ammersbek (DE)
(72) Erfinder: Wittmaack, Heiko, 22889 Tangstedt (DE); Rusch, Martin, 23815 Geschendorf (DE)
(74) Vertreter: Raffay & Fleck

(57) **Zusammenfassung**

Die Erfindung betrifft eine Führung für eine rückensteife Kette (1) in einem Übergang von einem Kettenrad (3) in einen ungeführten Bereich mit langgestreckter Kette (1), wobei in einem Bereich, in dem die Kette (1) von dem Kettenrad (3) abrollt eine an den Rollen (4) der Kette (1) vom Kettenrücken her angreifende Führungskulisse (60) angeordnet ist.

Bei bekannten Führungen ist der die Führung benötigte Bauraum vergleichsweise groß, so dass insbesondere bei einer Anordnung dieser Führung noch innerhalb eines einen Kettenvorrat beherbergenden Gehäuses entsprechende Gehäuseabmessungen vorzusehen sind.

Erfindungsgemäß ist die Führungskulisse mit einer gekrümmten Führungsfläche versehen und so bemessen, dass die Projektion einer Verbindungslinie eines vordersten Punktes (dies ist ein Punkt der Führungsfläche, der von dem Mittelpunkt des Kettenrades am weitesten entfernt ist) mit einem gedachten Umfangspunkt des Kettenrades, an dem der zugehörige Wirkradius des letzteren senkrecht zu einer Erstreckungsrichtung der langgestreckt und ungeführt weiterlaufenden Kette steht, eine kürzere Länge aufweist als das doppelte Maß einer Kettenteilung, allerdings länger ist als das einfache Maß dieser Kettenteilung.

## Beschreibung

### Technisches Gebiet

Die Erfindung betrifft eine Führung für eine rückensteife Kette in einem Übergang von einem Kettenrad in einen ungeführten Bereich mit lang gestreckter Kette gemäß den Merkmalen des Oberbegriffes des Anspruchs 1. Sie betrifft ferner eine Betätigungsvorrichtung für bewegliche Gebäudeteile, insbesondere schwenkbare Fenster oder Klappen, mit einem Antrieb und einer rückensteifen Kette als Kraftübertragungsglied, die eine solche Führung aufweist.

### Stand der Technik

Rückensteife Ketten werden vielfach als Kraftübertragungsglieder eingesetzt, wobei diese insbesondere Bereiche überspannen müssen, in denen sie lang gestreckt und vor allem ungeführt verlaufen. Über einen Antrieb wird eine Kraft auf die Kette aufgebracht, die sowohl in Zug- aber insbesondere auch in einer Druckrichtung der Kette auf ein an die Kette angeschlossenes Elemente übertragen wird. Innerhalb dieses Antriebes und ggf. in nachrangigen Führungen wird die Kette hierfür über Kettenräder geführt, die insbesondere an den Kettenrollen angreifen. Unter dem Begriff "Kettenrolle" oder auch "Rolle" ist im Sinne dieser Anmeldung allgemein ein festes oder drehbares Element zu verstehen, welches im Verbindungsbereich der Kettenglieder miteinander angeordnet ist und über das eine Kraft in die Kette eingeleitet werden kann. Im Übergangsbereich von einer Führung auf einem Kettenrad zu einem Abschnitt, in dem die Kette dann lang gestreckt und gerade zur Übertragung von Zug- und/oder Druckkräften weitergeführt wird, muss eine entsprechende Führung vorgesehen werden, um die Kette in die gewünschte Verlaufrichtung auszubringen. Anderenfalls könnte die Kette insbesondere keine Drucklast aufnehmen und würde aufgrund des Polygon-Effektes des Kettenrades, der um so stärker auftritt, je weniger Zähne dieses aufweist, und des insoweit nicht konstanten Radius desselben über einen Winkelbereich "hin- und herwandern".

Bisher wird dies im Stand der Technik insbesondere bei Kettenantrieben für die Kraftübertragung auf Gebäudeteile, wie insbesondere Fenster oder Klappen, gelöst, indem in einem Übergangsbereich von dem Kettenrad in den Bereich der freien und ungeführten Erstreckung der Kette eine Führungskulisse eingebracht wird, die mit einem im wesentlichen graden Verlauf ihrer Führungsfläche eine Richtung der Kette vorgibt. Um eine sichere Führung zu erreichen, ist die Kulisse mit ihrer Führungsfläche hier so gestaltet, dass die Länge der Projektion einer gedachten Verbindungslinie eines vordersten, das heißt am weitesten von dem Mittelpunkt des Kettenrades entfernten Punktes dieser Führungsfläche mit einem Punkt des Umfanges des Kettenrades, dessen zugehöriger Wirkradius senkrecht auf der Erstreckungsrichtung der langgestreckten, ungeführt verlaufenden Kette steht, auf die Erstreckungsrichtung der langgestreckt und ungeführt weiterlaufenden Kette, wenigstens das zweifachen Maß der Kettenteilung beträgt.

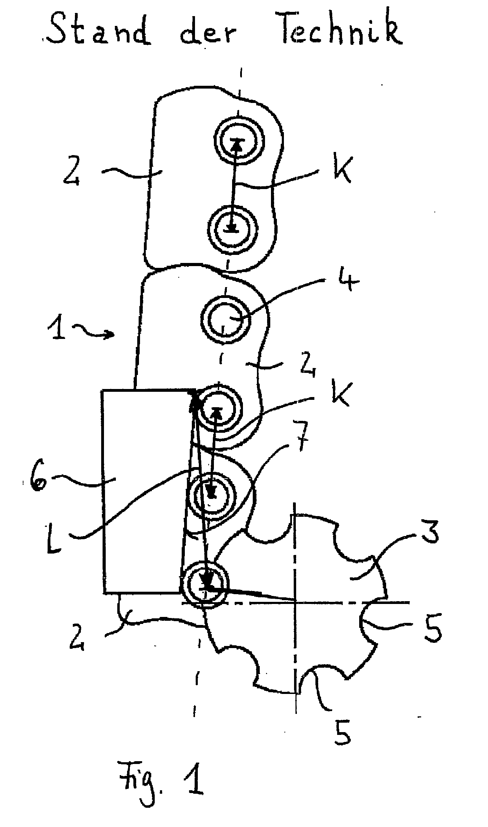

Diese Situation ist in Figur 1 dargestellt. Deutlich ist hier zu erkennen, wie die einzelnen Glieder 2 der rückensteifen Kette 1 über das Kettenrad 3 ablaufen. Dabei werden in dem Kettenrad in passenden Ausnehmungen 5 die die Kettenglieder 2 verbindenden Rollen 4 erfasst und transportiert bzw. geführt. In dem Bereich, in dem die Kette 1 das Kettenrad 3 verlässt, ist eine Führungskulisse 6 angeordnet, mit einer Führungsfläche 7. Über diese Führungsfläche 7 laufen die Rollen 4 der Kette 1, wobei die Führungsfläche 7 hier gerade gebildet ist. Ferner ist zu erkennen, dass die Länge der Projektion einer Verbindungslinie eines vordersten Punktes der Führungsfläche 7 mit einem Punkt auf dem Umfang des Kettenrades, dessen zugehöriger Wirkradius senkrecht zu der Erstreckungsrichtung der langgestreckt und ungeführt verlaufenden Kette steht, auf diese Erstreckungsrichtung eine Länge L von mehr als dem zweifachen Maß der Kettenteilung K (dies ist der Abstand der Mittelpunkte benachbarter Rollen zu einander) aufweist.

Mit einer solchen, aus dem Stand der Technik bekannten Führung, lässt sich eine gute und sichere Umlenkung und gerichtete Überführung der rückensteife Kette 1 in einen graden und ungeführten Abschnitt erzielen, wobei die Kette 1 insbesondere zur Übertragung von Druck- und Zugkräften geeignet ist. Allerdings ist der für diese Art der Führung benötigte Bauraum vergleichsweise groß, so dass insbesondere bei einer Anordnung dieser Führung noch innerhalb eines einen Kettenvorrat beherbergenden Gehäuses entsprechende Gehäuseabmessungen vorzusehen sind.

Insbesondere in der Antriebstechnik für die automatische Verstellung von Fenstern, Klappen und dergleichen Gebäudeteilen ist es jedoch erwünscht, Betätigungsvorrichtungen mit Antrieben, die als Kraftübertragungsglieder derartige rückensteife Ketten enthalten, bauen zu können, die in immer kompakteren Gehäusen untergebracht sind.

### Darstellung der Erfindung

Es ist daher Aufgabe der vorliegenden Erfindung, eine Führung für eine rückensteife Kette anzugeben, die bei einer sicheren und richtungsstabilen Überführung einer rückensteifen Kette in einem längs gerichteten, ungeführten Bereich dennoch eine kompakte Baugröße erlaubt.

Diese Aufgabe wird gelöst mit einer Führung für eine rückensteife Kette mit den Merkmalen des Schutzanspruches 1. Vorteilhafte Weiterbildungen sind in den abhängigen Schutzansprüchen 2 bis 4 angegeben. Ein weiterer Aspekt der Erfindung manifestiert sich in der in Anspruch 5 angegebenen Betätigungsvorrichtung, die eine erfindungsgemäße Führung für die darin enthaltene rückensteife Kette aufweist.

Erfindungsgemäß ist die Führungskulisse mit einer gekrümmten Führungsfläche versehen und so bemessen, dass die Projektion einer Verbindungslinie eines vordersten Punktes (dies ist ein Punkt der Führungsfläche, der von dem Mittelpunkt des Kettenrades am weitesten entfernt ist) mit einem gedachten Umfangspunkt des Kettenrades, an dem der zugehörige Wirkradius des letzteren senkrecht zu einer Erstreckungsrichtung der langgestreckt und ungeführt weiterlaufenden Kette steht, eine kürzere Länge aufweist als das doppelte Maß einer Kettenteilung, allerdings länger ist als das einfache Maß dieser Kettenteilung.

Die Wahl der verglichen mit dem Stand der Technik näher an dem Kettenrad liegenden Kulisse erlaubt zunächst die kompaktere Bauweise. Allerdings wird mit der Aufgabe der weiter abliegenden Kulisse, wie sie im Stand der Technik gegeben ist, mit einem Abstand L, der wenigstens dem doppelten Maß der Kettenteilung entspricht, in Kauf genommen, dass aufgrund des Polygon-Effektes des Kettenrades und dessen dadurch nicht konstanten Radius die Kette zum Ausbrechen aus der gewollten Richtung neigt. Diesem Effekt wird wiederum mit der gekrümmten Führungsfläche entgegengewirkt.

Denkt man sich die Richtungen der entlang der gekrümmten Führungsfläche fortschreitenden Kette zu unterschiedlichen Zeitpunkten, so gibt es bei geschickter Wahl der Krümmung einen Punkt, in welchem sich diese Richtungen schneiden. Durch entsprechende Einstellung der Krümmung kann dieser virtuelle Punkt entlang der Kettenausbreitung jenseits der Führung verschoben werden. Je nach Auslegung und Zweck der Kette und ihres Antriebes kann nun ein optimaler solcher virtueller Punkt bestimmt werden, der bei einer geringen verbleibenden Ausweichbewegung der Kette beim Verlassen des Kettenrades eine dennoch ausreichend sichere und gerade Fortbewegung der Kette gewährleistet.

So wird trotz der Aufgabe der vorteilhaften Führung entlang der Kulisse, deren vorderster Führungspunkt in der genannten Projektion in einem Abstand von mehr als zwei Kettenteilungen zu dem genannten Punkt auf dem Kettenrad liegt, eine ausreichend sichere Führung der Kette in dem Übergangsbereich in die längs gerichtete Erstreckung gewährleistet und insbesondere der erhebliche Vorteil eines kleineren erforderlichen Bauraumes erzielt.

Der erforderliche Bauraum kann insbesondere minimiert werden, wenn die Länge der genannten Projektion, wie in Anspruch 2 angegeben, das Maß der Kettenteilung um einen Wert von maximal 75 % übersteigt (Anspruch 2).

Als geeignete und einfach zu realisierende Konturen für die Führungsfläche haben sich eine kreisförmige Kontur (mit vergleichsweise großem Radius) bzw. eine Kontur in Form eines Ellipsenabschnittes erwiesen (vgl. Ansprüche 3 bzw. 4). Diese Konturen sollten sich jedenfalls über den größten Abschnitt der Führungsfläche erstrecken, ggf. können sich daran weitere, z.B. eine Trennung der Kette von der Führungsfläche während der Vorwärtsbewegung der Kette begünstigende Konturabschnitte anschließen.

**Kurze Beschreibung der Abbildungen der Zeichnungen**

Weitere Vorteile und Merkmale ergeben sich aus der nachfolgenden Beschreibung eines Ausführungsbeispiels anhand der beigefügten Figuren. Dabei zeigen:

Fig. 1 eine Führung für eine rückensteife Kette in einem Übergang von einem Kettenrad in einen ungeführten Bereich mit lang gestreckter Kette nach dem Stand der Technik mit lang gestreckter Kulissenführung im Schnitt,

Fig. 2 in einer Schnittdarstellung in zwei Positionen (erste Position durchgezogen, zweite Position gestrichelt) eine erfindungsgemäße Führung mit verkürzter Kulissenführung und gekrümmter Führungsfläche und

Fig. 3 in einer Schnittdarstellung von der Seite eine mit der erfindungsgemäßen Führung versehene Betätigungsvorrichtung.

### Weg(e) zur Ausführung der Erfindung

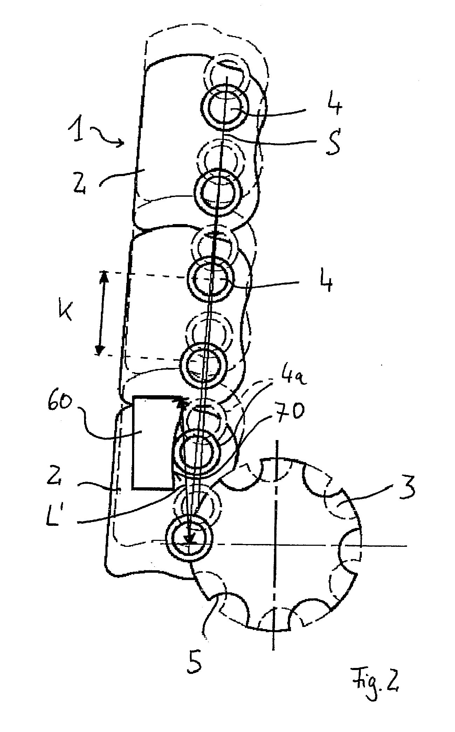

Eine erfindungsgemäße Führung für eine rückensteife Kette 1 ist in einem Ausführungsbeispiel in Figur 2 dargestellt. Diese Darstellung ist rein schematisch und insbesondere nicht als detailgetreue Konstruktionszeichnung zu verstehen. Ähnlich wie in der oben beschriebenen, den Stand der Technik zeigenden Figur 1 ist in Figur 2 ein Ausschnitt aus einer rückensteifen Kette 1 mit einzelnen Kettengliedern 2, die an ihren Verbindungsstellen Rollen 4 aufweisen, gezeigt. Der gezeigte Ausschnitt in Figur 2 stellt einen Übergang von einer durch ein Kettenrad 3, in dessen Ausnehmungen 5 die Rollen 4 geführt laufen, gebildeten Führung in einen ungeführten Bereich, in welchem die Kette 1 lang gestreckt verläuft, dar.

Um die Kette 1 in diesem Abschnitt sicher und zielgerichtet zu führen, ist hier eine Führungskulisse 60 angeordnet, über deren gekrümmte Führungsfläche 70 die Rollen 4 der auslaufenden Kette geführt werden. Die gekrümmte Führungsfläche 70 ist jedenfalls in einem überwiegenden und dem Kettenrad 3 zugewandten Abschnitt mit einer elliptischen Kontur gebildet.

Die Länge L' der Projektion einer Verbindungslinie eines vordersten Führungspunktes der Führungsfläche 70 mit einem Punkt auf dem Umfang des Kettenrades 3, dessen zugehöriger Wirkradius senkrecht auf der Erstreckungsrichtung der langgestreckt und ungeführt weiterlaufenden Kette steht, auf diese Erstreckungsrichtung entspricht hier in etwa dem 1,7-Fachen der Kettenteilung K.

Um die Wirkweise dieser erfindungsgemäßen Führung besser zu verstehen, ist die rückensteife Kette 1 in zwei Positionen, einmal mit durchgezogener Linie und in fortgeschrittener Position in gestrichelter Umrisszeichnung dargestellt. Zunächst ist zu erkennen, dass die auf der Führungsfläche 70 geführte Rolle 4a dem gekrümmten Weg folgt, wodurch die Kette weiter in Richtung des Kettenrades 3 gezwungen wird. Diese gezwungene Umlenkung widerspricht dem natürlichen Drang der von dem Kettenrad 3 ablaufenden Kette 1, in der anderen Richtung, also in der Figur nach links weg zu laufen. Durch die bewusste, geringfügige Umlenkung der Kette im Verlaufe ihrer Führung über die Führungsfläche 70 ergeben sich in den gezeigten Positionen unterschiedliche Längserstreckungen, die mit den beiden jeweils durch die Mittelpunkte der Rollen 4 gelegten Linien dargestellt sind. Diese Linien treffen sich in einem virtuellen Schnittpunkt S. Die Wahl der Kontur der Führungsfläche 70 hat entscheidenden Einfluss auf die Lage dieses virtuellen Schnittpunktes S, wobei es abhänging von den konkreten Verhältnissen (z.B. Kettengröße, Länge des in gestrecktem Zustand und ungeführt von der Kette zu überspannenden Bereiches) eine optimale Lage dieses Schnittpunktes S gibt für eine sichere und in hohem Maß winkelstabile Weiterführung der rückensteife Kette 1 in den ungeführten Bereich, in welchem diese grade verläuft und entsprechend auf Zug und auch auf Druck belastet werden kann.

Das mit Hilfe der gekrümmten Führungsfläche 70 bewusst erzielte "Gegensteuern" gegen ein natürliches Ausbrechen der Kette 1 sorgt auf diese Weise für eine richtungssichere Weiterführung der Kette in den nicht geführten Bereich, und dies obwohl die Führungskulisse 60 gegenüber dem Stand der Technik deutlich kleiner bemaßt werden kann, was letztlich zu der Möglichkeit einer noch kompakteren Bauweise mit geringerem Bauraum führt.

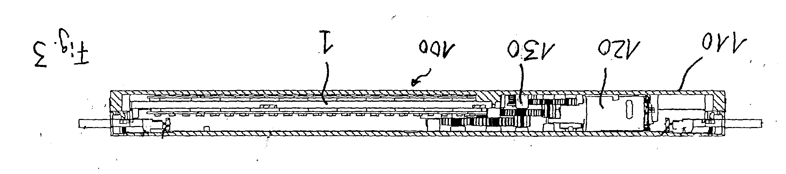

In Fig. 3 ist schließlich schematisch eine Betätigungsvorrichtung 100 in einem Seitenschnitt dargestellt, wie sie insbesondere zum automatischen Öffnen und Schließen von Fenstern, Klappen oder anderen Gebäudeteilen eingesetzt wird.

Die Betätigungsvorrichtung 100 umfasst ein Gehäuse 110, innerhalb dessen ein Motor 120 und ein an diesen angebundenes Getriebe 130 angeordnet sind. Motor 120 und Getriebe 130 bilden zusammen den Antrieb für die rückensteife Kette 1. Die rückensteife Kette 1 ist mit einem freien Ende aus dem Gehäuse 110 herausgeführt (hier nicht dargestellt) und an ein zu betätigendes Element (z.B. ein kippbares Fenster) angeschlagen. In dem Bereich, in dem die Kette 1 aus dem Gehäuse herausgeführt ist, ist eine wie in Fig. 2 schematisch dargestellte Führung mit der erfindungsgemäßen Führungskulisse vorgesehen. Diese ermöglicht eine besonders schmale Bauweise der Betätigungsvorrichtung 100, was insbesondere für einen angestrebten sichtverdeckten Einbau derselben in die Gebäudeteile von erheblichem Vorteil ist.

**Bezugszeichenliste**

1 rückensteife Kette

2 Glied

3 Kettenrad

4, 4a Rolle

5 Ausnehmung

6, 60 Führungskulisse

7, 70 Führungsfläche

100 Betätigungsvorrichtung

110 Gehäuse

120 Motor

130 Getriebe

K Kettenteilung

L, L' Abstand

S virtueller Schnittpunkt

### Nicht erkannter Text

## Patentansprüche

1. Führung für eine rückensteife Kette (1) in einem Übergang von einem Kettenrad (3) in einen ungeführten Bereich mit langgestreckter Kette (1), wobei in einem Bereich, in dem die Kette (1) von dem Kettenrad (3) abrollt eine an den Rollen (4) der Kette (1) vom Kettenrücken her angreifende Führungskulisse (60) angeordnet ist, **dadurch gekennzeichnet, dass** die Führungskulisse (60) eine gekrümmte Führungsfläche (70) aufweist, wobei die Projektion einer Verbindungslinie eines vordersten, d.h. maximal von einem Ablaufpunkt der Kette von dem Kettenrad (3) abgewandten Führungspunktes mit einem gedachten Umfangspunkt des Kettenrades, dessen zugehörige Wirkradius senkrecht auf der Erstreckungsrichtung der langgestreckten Kette in dem ungeführten Bereich steht, auf diese Erstreckungsrichtung eine Länge (L') aufweist, die kleiner ist als das doppelte Maß einer Kettenteilung (K) der Kette (1), jedoch größer als das einfache Maß dieser Kettenteilung (K).

2. Führung für eine rückensteife Kette nach Anspruch 1, **dadurch gekennzeichnet, dass** die Länge (L') das einfache Maß der Kettenteilung (K) um einen Wert von maximal 75%, übersteigt.

3. Führung für eine rückensteife Kette nach einem der vorhergehenden Ansprüche, **dadurch gekennzeichnet, dass** die Führungsfläche (70) jedenfalls in ihrem größten Abschnitt im Schnitt eine kreisabschnittförmige Kontur aufweist.

4. Führung für eine rückensteife Kette nach einem der Ansprüche 1 bis 2, **dadurch gekennzeichnet**, das die Führungsfläche (70) jedenfalls in ihrem größten Abschnitt im Schnitt eine Kontur in Form eines Ellipsenabschnittes aufweist.

5. Betätigungsvorrichtung für bewegliche Gebäudeteile, insbesondere schwenkbare Fenster oder Klappen, mit einem aus einem Gehäuse, in dem ein Antrieb und ein mit einem Ende aus dem Gehäuse herausführbares Kraftübertragungsglied in Form einer rückensteifen Kette (1) angeordnet sind, **dadurch gekennzeichnet, dass** an einem Gehäusedurchtritt eine Führung für die rückensteife Kette (1) nach einem der Ansprüche 1 bis 4 angeordnet ist.
